# FASCICULE DE BREVET EUROPEEN

(11) **EP 4 429 879 B1**
(45) Date de publication et mention de la délivrance du brevet: **03.12.2025**
(21) Numéro de dépôt: 22802682.9
(22) Date de dépôt: 25.10.2022
(51) Int. Cl.: B29D 30/30

(54) **INSTALLATION DE FABRICATION DE BANDAGES PNEUMATIQUES POURVUE DE COMPAS SUIVEURS D'OUTILS**
REIFENHERSTELLUNGSANLAGE MIT WERKZEUGFOLGEGESTÄNGE
TIRE-PRODUCING FACILITY PROVIDED WITH TOOL-FOLLOWING LINKAGES

(30) Priorité: 09.11.2021 FR 2111844
(43) Date de publication de la demande: 18.09.2024
(73) Titulaire: COMPAGNIE GENERALE DES ETABLISSEMENTS MICHELIN, 63000 Clermont-Ferrand (FR)
(72) Inventeur: MALVAL, Guilhaume, 63040 CLERMONT-FERRAND Cedex 9 (FR); MELOUX, Denis, 63040 CLERMONT-FERRAND Cedex 9 (FR); MEALLIER, Clément, 63040 CLERMONT-FERRAND Cedex 9 (FR)
(74) Mandataire: M.F.P. Michelin
(86) Numéro de dépôt international: PCT/FR2022/052017
(87) Numéro de publication internationale: WO 2023/084171

(56) Documents cités:
- WO-A1-2004/041520
- WO-A1-2020/099807
- WO-A1-2021/123541

## Description

La présente invention concerne le domaine de la fabrication des bandages pour roues de véhicules, et plus particulièrement la fabrication de bandages pneumatiques.

Pour réaliser ce type de fabrication, il est connu d'utiliser des installations automatisées qui permettent de poser successivement sur un support, tel qu'un tambour, les différents composants constitutifs du pneumatique.

Pour poser ces différents composants, il est généralement nécessaire de disposer de plusieurs outils de pose, répartis sur plusieurs postes, et de déplacer successivement le tambour d'un poste à l'autre.

Or, de telles installations sont particulièrement encombrantes et onéreuses. Elles sont d'autant plus encombrantes que la variété des bandages à produire est grande, et donc que le nombre de composants de bandage à prévoir, ainsi que, le cas échéant, le nombre de tambours de dimensions différentes à prévoir, est élevé.

Le document de brevet WO 2021/123541 A1 divulgue des caractéristiques similaires à celles du préambule de la revendication indépendante 1.

Les objets assignés à l'invention visent par conséquent à remédier aux inconvénients susmentionnés et proposer une nouvelle installation de fabrication de bandages qui soit particulièrement compacte et performante, tout en étant très polyvalente de sorte à pouvoir réaliser une large variété de bandages.

Les objets assignés à l'invention sont atteints au moyen d'une installation destinée à la fabrication de bandages pour roues de véhicules, ladite installation étant caractérisée en ce qu'elle comprend :
- une zone de travail comprenant un tambour qui est monté rotatif autour de son axe central et qui est destiné à recevoir une pluralité de composants constitutifs d'un bandage, de préférence des composants à base de caoutchouc,
- un magasin, qui est placé en périphérie de la zone de travail, et qui possède un support portant une pluralité d'outils de pose distincts, destinés chacun à poser un composant différent,
- un robot manipulateur qui est agencé pour tout d'abord venir saisir sélectivement un outil de pose en attente dans le magasin et amener ledit outil de pose auprès du tambour afin d'utiliser ledit outil de pose pour poser le composant correspondant sur le tambour, puis ensuite retourner ledit outil de pose au magasin et se détacher dudit outil de pose afin de l'échanger contre un autre outil de pose présent dans le magasin,
et en ce que plusieurs des outils de pose sont reliés chacun au support du magasin par un organe suiveur articulé, dit « compas », qui est propre à l'outil de pose considéré et qui est agencé pour accompagner l'outil de pose lorsque ledit outil de pose est déplacé par le robot manipulateur, chaque compas comprenant à cet effet :
- un fût, par lequel le compas est rattaché au support du magasin et qui permet audit compas de s'orienter en lacet en effectuant, par rapport au support du magasin, une rotation autour d'un axe vertical,
- un premier bras qui est rattaché au fût par une première liaison pivot d'axe horizontal qui permet au premier bras de basculer en tangage par rapport au fût,
- un second bras qui s'articule sur le premier bras par une seconde liaison pivot d'axe horizontal, distante de la première liaison pivot, et qui permet au second bras de basculer en tangage par rapport au premier bras, ledit second bras présentant, à distance de la seconde liaison pivot, une extrémité libre à laquelle est rattaché l'outil de pose concerné.

Avantageusement, l'installation selon l'invention permet de mutualiser un robot manipulateur, ici unique, que se partageront plusieurs outils de pose dédiés chacun à un composant donné. On peut ainsi réduire significativement l'encombrement au sol de l'installation, tout en ayant la possibilité de poser une grande variété de composants différents, avec autant d'outils de pose distincts, qui seront saisis, activés et manipulés les uns après les autres par le même robot manipulateur, en fonction des besoins.

Avantageusement, les compas permettent d'accompagner les outils de pose dans les déplacements que leur impose le robot manipulateur, et facilitent le stockage compact desdits outils de pose dans le magasin ainsi que la mise desdits outils de pose à disposition du robot manipulateur. En effet, les bras de chaque compas sont avantageusement repliés l'un contre l'autre lorsque l'outil de pose est stationné en attente dans le magasin, à l'écart du tambour, et peuvent avantageusement se déplier, en s'ouvrant pour s'écarter l'un de l'autre, lorsque le robot manipulateur saisit ledit outil de pose et l'éloigne de l'emplacement d'attente que ledit outil de pose occupait dans le magasin, pour gagner le tambour.

Avantageusement, les liaisons pivots des bras du compas permettent audit compas de couvrir toute variation utile de distance, ainsi que toute éventuelle variation utile de hauteur, de l'outil de pose par rapport à son emplacement de stationnement dans le magasin, et donc également par rapport au tambour, pour permettre à l'outil de pose d'effectuer, au voisinage du tambour, les déplacements nécessaires à la pose du composant correspondant sur le tambour. Le fût permet en outre de modifier l'orientation globale du compas en lacet, de sorte que, en combinaison avec l'ajustement de la distance de l'outil de pose par rapport au fût, le compas laisse l'outil de pose libre d'accéder à tout point de la zone de travail tel que voulu par le robot manipulateur, et de suivre toute trajectoire imposée par ledit robot manipulateur.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue schématique de dessus, une installation selon l'invention qui comporte plusieurs compas, qui se trouvent ici tous dans une configuration repliée que lesdits compas adoptent lorsque leurs outils de pose respectifs se trouvent chacun à son emplacement de stationnement, en attente dans le magasin.
La figure 2 illustre, selon la même vue schématique de dessus que la figure 1, l'installation au sein de laquelle le robot manipulateur a saisi l'un des outils de pose pour l'amener jusqu'au tambour, et le compas correspondant s'est déployé et orienté de manière à accompagner le mouvement dudit outil de pose, pour suivre la trajectoire imposée à l'outil de pose par le robot manipulateur.
La figure 3 illustre, selon une vue schématique de côté, un compas utilisé par l'installation de la figure 1, dans la configuration repliée adoptée lorsque l'outil de pose se trouve à son emplacement de stationnement, en attente dans le magasin.
La figure 4 illustre, selon la même vue schématique de côté, le compas de la figure 2 dans une configuration déployée, lorsque ledit compas accompagne le déplacement de l'outil de pose saisi et entraîné par le robot manipulateur.

La présente invention concerne une installation 1 destinée à la fabrication de bandages pour roues de véhicules, de préférence des bandages pneumatiques.

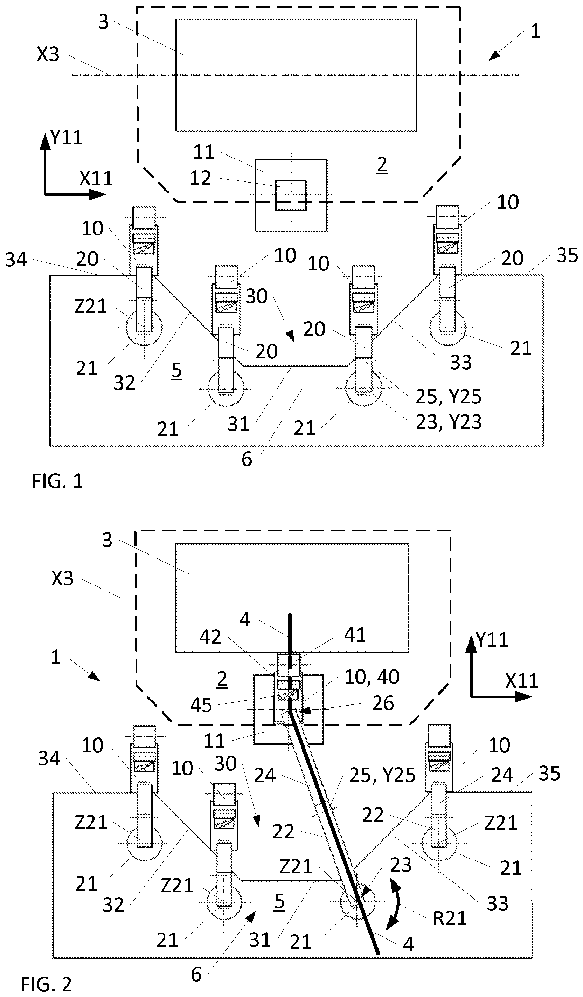

L'installation 1 comprend une zone de travail 2, illustrée en pointillés sur les figures 1 et 2.

Cette zone de travail 2 comprend un tambour 3 qui est monté rotatif autour de son axe central X3 et qui est destiné à recevoir une pluralité de composants 4 constitutifs d'un bandage.

De préférence, l'axe central X3 du tambour 3 est horizontal.

De préférence, les composants 4 constitutifs du bandage seront des composants à base de caoutchouc.

Parmi ces composants 4, on pourra notamment trouver des rubans extrudés formés d'un seul tenant dans un matériau à base de caoutchouc, ou des bandelettes de caoutchouc, ou bien encore des bandelettes de renfort, telles que par exemple des bandelettes comprenant une matrice de caoutchouc dans laquelle sont noyés des fils de renfort, de préférence métalliques, qui peuvent être disposés parallèlement les uns aux autres et parallèlement à la direction longitudinale de la bandelette, ou bien encore des bandelettes composite comprenant une matrice en résine dans laquelle sont noyées des fibres de renfort en verre ou en polyamide.

L'installation 1 comprend également un magasin 5, qui est placé en périphérie de la zone de travail 2, et qui possède un support 6 portant une pluralité d'outils de pose 10 distincts, destinés chacun à poser un composant 4 différent.

On pourra ainsi disposer d'une grande variété de composants 4 disponibles, et d'outils de pose 10 adaptés, pour réaliser différents modèles de bandages.

Tant qu'il n'est pas utilisé pour poser un composant 4 sur le tambour 3, chaque outil de pose 10 se trouve rangé en attente dans le magasin 5, à un emplacement de stationnement prédéterminé sur le support 6, emplacement de stationnement qui est propre audit outil de pose 10.

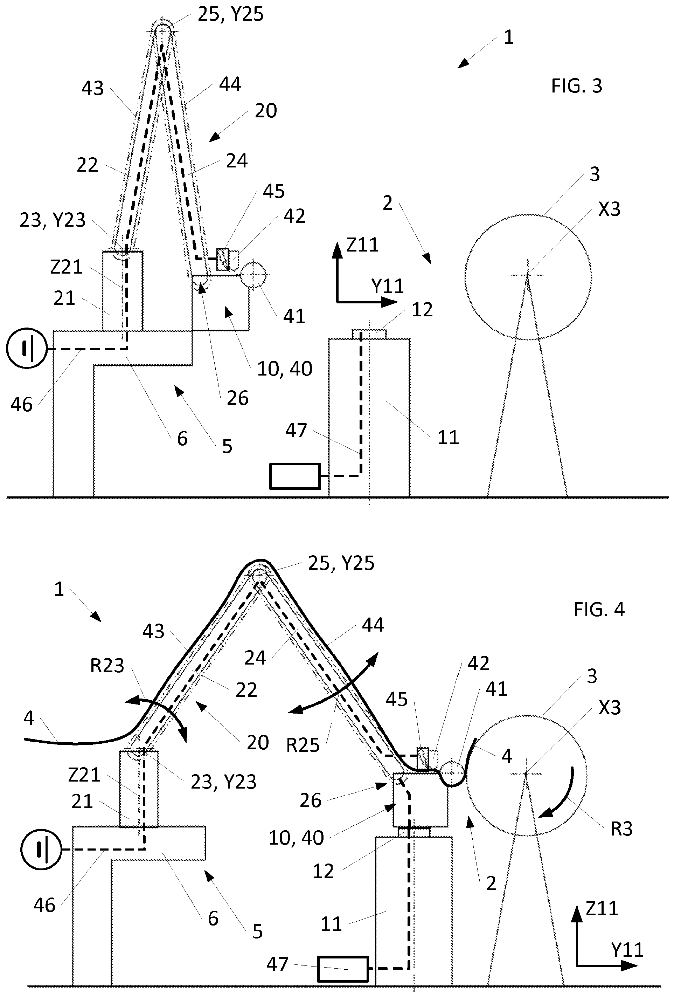

L'installation 1 comprend également un robot manipulateur 11 qui est agencé pour tout d'abord venir saisir sélectivement un outil de pose 10 en attente dans le magasin 5 et amener ledit outil de pose 10 auprès du tambour 3 afin d'utiliser ledit outil de pose 10 pour poser le composant 4 correspondant sur le tambour 3, tel que cela est visible sur les figures 2 et 4, puis ensuite retourner ledit outil de pose 10 au magasin 5 et se détacher dudit outil de pose 10, tel que cela est illustré sur les figures 1 et 3, afin de pouvoir échanger ledit outil de pose 10 contre un autre outil de pose 10 présent dans le magasin 5.

Avantageusement, le robot manipulateur 11 sera ainsi partagé entre les différents outils de pose 10 stockés dans le magasin 5 et possédera une interface d'amarrage 12 commune, adaptée à l'ensemble desdits outils de pose 10, de sorte que le robot manipulateur 11 pourra, pour chaque opération de pose, sélectionner l'outil de pose 10 adapté et délivrant le composant requis, accéder à l'emplacement dudit outil de pose 10 dans le magasin 5 et s'accoupler audit outil de pose 10 au moyen de l'interface d'amarrage 12 afin d'embarquer et transporter ledit outil de pose 10 du magasin 5 jusqu'au tambour 3, utiliser ledit outil de pose 10 pour poser le composant 4 souhaité sur le tambour 3, typiquement en enroulant ou en trancanant ledit composant 4 sur ledit tambour 3 tandis que le tambour 3 est animé d'un mouvement de rotation R3 autour de son axe central X3, puis enfin rapporter ledit outil de pose 10 au magasin 5 et se désaccoupler dudit outil de pose 10 en larguant ainsi ce dernier dans le magasin 5, dans une position d'attente prédéterminée, et en libérant ainsi l'interface d'amarrage 12 pour un autre outil de pose 10.

L'utilisation de plusieurs outils de pose 10 interchangeables et d'un robot manipulateur 11 commun permettra avantageusement de minimiser l'encombrement au sol de l'installation 1 en autorisant une grande variété d'opérations de pose au sein d'une même zone de travail 2 relativement peu étendue.

Le robot manipulateur 11 sera de préférence conçu pour déplacer l'outil de pose 10 dans un plan horizontal, selon une première direction X11 horizontale et une seconde direction Y11 horizontale qui sont perpendiculaires l'une à l'autre. Selon une possible variante de réalisation, le robot manipulateur 11 pourra également déplacer en hauteur l'outil de pose 10, selon une troisième direction Z11 verticale. Plus globalement, le robot manipulateur 11 pourra être agencé pour effectuer tout mouvement utile à la pose des composants 4.

Selon l'invention, plusieurs des outils de pose 10, et le cas échéant la totalité des outils de pose 10, sont reliés chacun au support 6 du magasin 5 par un organe suiveur 20 articulé, dit « compas » 20, qui est propre à l'outil de pose 10 considéré et qui est agencé pour accompagner l'outil de pose 10 lorsque ledit outil de pose 10 est déplacé par le robot manipulateur 11, chaque compas 20 comprenant à cet effet :
- un fût 21, par lequel le compas 20 est rattaché au support 6 du magasin 5 et qui permet audit compas 20 de s'orienter en lacet en effectuant, par rapport au support 6 du magasin 5, une rotation R21 autour d'un axe Z21 vertical ; ledit fût 21 assure ainsi avantageusement un ancrage permanent mais orientable du compas 20 sur le support 6,
- un premier bras 22 qui est rattaché au fût par une première liaison pivot 23 d'axe Y23 horizontal qui permet au premier bras 22 de basculer en tangage R23 par rapport au fût 21,
- un second bras 24 qui s'articule sur le premier bras 22 par une seconde liaison pivot 25 d'axe Y25 horizontal, distante de la première liaison pivot 23, et qui permet au second bras 24 de basculer en tangage R25 par rapport au premier bras 22, ledit second bras 24 présentant, à distance de la seconde liaison pivot 25, une extrémité libre 26 à laquelle est rattaché l'outil de pose 10 concerné.

Chaque compas 20, distinct du robot manipulateur 11, assure avantageusement l'accompagnement de l'outil de pose 10 lorsque ledit outil de pose 10 est décroché et extrait du support 6 par le robot manipulateur 11, puis entraîné en déplacement dans la zone de travail 2 par le robot manipulateur 11. En effet, grâce aux degrés de liberté en lacet et en tangage octroyés par le compas 20, l'extrémité libre 26 dudit compas 20, qui est raccordée à l'outil de pose 10, peut avantageusement se déplacer par rapport au support 6 et accéder à toute position voulue dans la zone de travail 2, et ainsi suivre l'outil de pose 10 quelle que soit la trajectoire et la position imposées audit outil de pose 10 par le robot manipulateur 11.

Avantageusement, quelle que soit la position et la trajectoire de l'outil de pose 10, le compas 20 garantit avantageusement que ledit outil de pose 10 est en permanence alimenté par le composant 4 voulu. En effet, le compas 20 permet de transporter et de guider jusqu'à l'outil de pose 10 le composant 4, ou une matière première permettant à l'outil de pose 10 d'élaborer le composant 4, en provenance d'une zone d'alimentation qui est située hors de la zone de travail 2. Cette zone d'alimentation pourra correspondre à une zone de l'installation, autre que la zone de travail 2, dans laquelle est stockée ou produit ledit composant 4, respectivement la matière première nécessaire à l'élaboration du composant 4.

Le premier bras 22 et le second bras 24 sont de préférence rectilignes. Lesdits bras 22, 24 présentent de préférence chacun une structure rigide, préférentiellement de longueur fixe.

Les axes Y23 et Y25 horizontaux des première et seconde liaisons pivots 23, 25 sont de préférence parallèles entre eux.

Selon une première possibilité préférentielle d'agencement, qui est visible sur les figures 3 et 4, le premier bras 22 forme un bras ascendant, de sorte que la seconde liaison pivot 25 est située à une altitude strictement supérieure à l'altitude de la première liaison pivot 23 qui lie ledit premier bras 22 au fût 21.

Selon cette première possibilité préférentielle d'agencement, le second bras 24 formera alors de préférence un bras descendant, de sorte que son extrémité libre 26, et par conséquent l'outil de pose 10, se trouve à une altitude strictement inférieure à celle de la seconde liaison pivot 25 qui lie ledit second bras 24 au premier bras 22. Le compas 20 présentera alors, vu dans un plan vertical parallèle aux bras 22, 24, un agencement en « A ».

Selon une seconde possibilité préférentielle d'agencement, non représentée, le premier bras 22 sera cette fois un bras descendant, et le second bras 24 un bras ascendant, de sorte que le compas présentera cette fois un agencement en « V ».

Globalement, et quel que soit l'agencement, en A ou en V, considéré, le compas 20 présente donc de préférence une structure triangulaire, dont un premier sommet est formé par la première liaison pivot 23, dont un second sommet, supérieur dans l'agencement en A, inférieur dans l'agencement en V, est formé par la seconde liaison pivot 25, et dont le troisième sommet est formé par l'extrémité libre 26 portant l'outil de pose 10. La base de cette structure triangulaire, c'est-à-dire la distance séparant l'extrémité libre 26 de la première liaison pivot 23 rattachée au fût 21 et donc au support 6 du magasin 5, peut avantageusement être ajustée en faisant basculer en tangage R23, R25 les bras 22, 24, afin d'augmenter l'angle formé par lesdits bras 22, 24 pour déplier lesdits bras 22, 24 et ainsi augmenter ladite distance, ou au contraire réduire ledit angle pour replier les bras 22, 24 afin de raccourcir ladite distance.

De préférence, lorsque le compas 20 se trouve en configuration repliée, l'outil de pose 10 étant en attente dans le magasin 5, alors le bras ascendant, que l'on considère l'agencement en A ou l'agencement en V, ici par exemple le premier bras 22 sur les figures 3 et 4, est sensiblement vertical c'est-à-dire que ledit bras ascendant, ici le premier bras 22, s'étend alors selon une direction longitudinale qui forme avec l'axe vertical Z21 un angle inférieur à 20 degrés, inférieur à 10 degrés, voire un angle nul.

La rotation en lacet R21 du fût 21 permet par ailleurs au compas 20, en projection dans un plan horizontal, de s'aligner en azimut sur la direction qui est imposée par d'une part le point fixe défini, vis-à-vis du support 6, par l'axe de lacet Z21 et par d'autre part le second point, mobile, correspondant à l'extrémité libre 26 et à l'outil de pose 10.

Ainsi, le compas 20 peut avantageusement suivre toutes les trajectoires imposées à l'outil de pose 10 par le robot manipulateur 11 au sein de la zone de travail 2, et lors des transferts entre la zone de travail 2 et le magasin 5 et réciproquement.

On notera que, de préférence, les compas 20 sont passifs, en ceci que les première et seconde liaisons pivot 23, 25 de tangage ainsi que la liaison pivot de lacet du fût 21, et plus globalement toutes les articulations du compas 20 considéré, sont libres, afin de s'orienter spontanément sous les contraintes de déplacement que le robot manipulateur 11 impose à l'outil de pose 10. Plus particulièrement, lesdites liaisons seront donc de préférence non motorisées. La structure du compas 20 sera ainsi particulièrement légère et s'adaptera en souplesse et immédiatement aux mouvements contraints de l'outil de pose 10.

On notera que l'installation 1 peut également comporter des outils non rattachés à des compas 20, tels que par exemple des outils de mesure d'épaisseur utilisant un palpeur, qui pourront être disponibles sur le support 6, et accessibles au robot manipulateur 11 au même titre que les outils de pose 10.

Selon une caractéristique préférentielle qui peut constituer une invention à part entière, le support 6 du magasin 5 présente, tel que cela est bien visible sur les figures 1 et 2, un agencement échancré 30 formant une délimitation concave par rapport à la zone de travail 2.

Avantageusement, un tel agencement échancré 30 permet de disposer un nombre relativement élevé de compas 20 à relative proximité de la zone de travail 2 et du tambour 3, et de manipuler alternativement les différents outils de pose 10, et donc les différents compas 20 correspondants, sans risquer de collision ou d'interférence de trajectoire entre l'outil de pose 10 manipulé, et donc son compas 20, d'une part, et les autres outils de pose 10, et leurs compas 20 respectifs, qui se trouvent en attente dans la magasin 5, d'autre part.

Ici encore, on favorise la compacité de l'installation 1, ainsi que son efficacité, puisque les distances et les durées des trajets nécessaires aux changements d'outil de pose 10 sont particulièrement courtes.

Préférentiellement, le support 6 du magasin 5 dessine, en projection dans un plan horizontal, et tel que cela est bien visible sur la figure 1, une forme en U qui s'ouvre sur la zone de travail 2, ladite forme en U comprenant une branche de fond 31 et deux branches latérales 32, 33.

Selon une possibilité préférentielle d'agencement, qui correspond à l'installation illustrée sur les figures 1 et 2, le support 6 du magasin dessine, en projection dans le plan horizontal susmentionné, une forme en U trapézoïdale qui s'ouvre sur la zone de travail 2 par la grande base du trapèze.

Quel que soit l'agencement des branches 31, 32, 33 de ladite forme en U, des compas 20 sont alors de préférence implantés sur au moins deux desdites branches 31, 32, 33, plus préférentiellement sur chacune de ces trois branches 31, 32, 33.

Avantageusement, les branches 31, 32, 33 de la structure en U forment ainsi des rives, de préférence horizontales, qui encadrent la zone de travail 2, et sur lesquelles il est avantageusement possible de répartir une pluralité de compas 20, et plus particulièrement les fûts 21 desdits compas 20, de manière à ce que lesdits compas 20 puissent s'orienter et se déployer librement, chacun à leur tour, sans être gênés ni entrer en collision avec les autres compas 20 se trouvant au repos. L'agencement en U permet ainsi de multiplier les compas 20 et donc les outils de pose 10 et les composants 4 disponibles, dans un espace restreint, et tout en conservant la fiabilité et la sûreté de fonctionnement de l'installation 1.

Bien entendu, le support 6 du magasin 5 pourra s'étendre au-delà de l'agencement échancré 30, et par exemple comporter des prolongements 34, 35 horizontaux, parallèles à l'axe central X3 du tambour 3. L'installation 1 pourra alors comporter d'autres outils de pose 10 et/ou d'autres compas 20 implantés sur ces prolongements 34, 35.

De préférence, pour faciliter l'amenée puis l'enlèvement du tambour 3, et pour permettre un libre accès d'un opérateur à la zone de travail 2 et au support 6 pour les opérations de maintenance, les compas 20 seront tous situés du même côté d'un plan vertical fictif contenant l'axe central Z3 horizontal du tambour 3, axe central Z3 qui est ici de préférence parallèle à la direction de la branche de fond 31 de la structure en U.

De préférence, au moins un outil de pose 10 est formé par une tête de pose de bandelette 40.

Une telle bandelette se présente sous forme d'une bande continue et aplatie, qui est acheminée dans un sens qui correspond à sa direction longitudinale, et qui arrive déjà formée à l'outil de pose 10, prête à être posée telle quelle sur le tambour 3. Ladite bandelette pourra être une bandelette de caoutchouc simple, sans fils de renfort, ou bien une bandelette de renfort qui comprend une matrice, de préférence à base de caoutchouc, dans laquelle sont noyés des fils de renfort, par exemple des fils métalliques. De préférence, ces fils de renfort sont continus et s'étendent parallèlement les uns aux autres, par exemple parallèlement à la direction longitudinale de la bandelette.

Ladite tête de pose de bandelette 40 comprend, tel que cela est notamment visible sur les figures 2, 3 et 4, un rouleau applicateur 41 qui est agencé pour presser une bandelette contre le tambour 3, tel que cela est illustré sur la figure 4, ainsi qu'une lame de coupe 42 pour couper la bandelette à la longueur souhaitée en fin de pose.

Avantageusement, le compas 20 qui est associé à ladite tête de pose de bandelette 40 comprend de préférence un convoyeur 43, 44 qui est agencé pour acheminer la bandelette le long des premier et second bras 22, 24 du compas 20, jusqu'à la tête de pose de bandelette 40.

De préférence, le compas 20 comprendra un premier convoyeur 43 et un second convoyeur 44, associés respectivement au premier bras 22 et au second bras 24. La bandelette sera ainsi acheminée et guidée précisément le long des bras 22, 24, sans risque notamment de chuter ou de s'accrocher dans un éventuel obstacle.

Le ou les convoyeurs 43, 44 pourront être, pour certains ou pour tous, motorisés.

De préférence, lorsque le compas 20 comprend un bras ascendant et un bras descendant, quel que soit par ailleurs l'ordre desdits bras, alors le convoyeur affecté au bras ascendant sera de préférence motorisé, tandis que le convoyeur associé au bras descendant sera de préférence passif, c'est-à-dire non motorisé. On obtiendra ainsi, avec une structure simple et une moindre consommation d'énergie, un acheminement efficace et sans heurts de la bandelette jusqu'à la tête de pose de bandelette 40.

Dans l'exemple illustré sur les figures 3 et 4, on aura ainsi plus particulièrement un premier convoyeur 43, ascendant, qui sera motorisé, tandis que le second convoyeur 44, descendant, sera passif.

En variante, les deux convoyeurs 43, 44 pourraient être passifs.

La bandelette sera de préférence entraînée en traction par son enroulement sur le tambour 3, au niveau du rouleau applicateur 41, tandis que le premier convoyeur 43, s'il est motorisé, sera asservi en fonction de la rotation R3 motorisée du tambour 3, et ce afin de réguler la tension de la bandelette, en évitant l'apparition de tensions excessives dans la bandelette, qui pourraient déformer la bandelette et ainsi générer des défauts dans le bandage, ou au contraire l'apparition d'un relâchement excessif de la bandelette qui pourrait faire perdre le contrôle de la trajectoire de la bandelette.

La bandelette pourra avantageusement provenir d'un poste de l'installation situé en-dehors de la zone de travail 2, par exemple d'un poste de stockage comprenant une réserve de bandelette enroulée sur une bobine, ou bien d'un poste de préparation comprenant une calandre qui produit la bandelette à la volée, au fur et à mesure des besoins.

La lame de coupe 42 pourra être de toute forme appropriée, par exemple une lame droite effectuant un mouvement tranchant ou bien encore une lame hélicoïdale portée par un cylindre de coupe monté en rotation autour d'un axe transverse à la direction longitudinale de la bandelette.

De préférence, la tête de pose de bandelette 40 comprend un élément chauffant 45 pour chauffer la lame de coupe 42.

Ledit élément chauffant 45 peut être par exemple une résistance électrique chauffante.

Selon une caractéristique préférentielle, l'alimentation 46 en énergie, de préférence en énergie électrique, dudit élément chauffant 45 passe par le compas 20, de façon à ne pas être interrompue lorsque le robot manipulateur 11 repose la tête de pose de bandelette 40 dans le magasin 5 et se détache de ladite tête de pose de bandelette 40, tandis que l'alimentation 47 en énergie motrice, par exemple pneumatique ou électrique, qui est destinée à actionner la lame de coupe 42 pour couper la bandelette, passe par le robot manipulateur 11, ici plus particulièrement par l'interface d'amarrage 12, de sorte à être raccordée à la tête de pose de bandelette 40 lorsque ledit robot manipulateur 11 saisit ladite tête de pose de bandelette 40, puis déconnectée de ladite tête de pose de bandelette 40 lorsque le robot manipulateur 11 se sépare de nouveau de ladite tête de pose de bandelette 40.

Avantageusement, un tel agencement permet d'alimenter en permanence l'élément chauffant 45, et donc de maintenir en permanence, y compris lorsque la tête de pose de bandelette 40 se trouve en attente dans le magasin 5, la lame de coupe 42 chaude, à la température de service voulue, supérieure à la température ambiante, de sorte que l'on ne perd pas de temps de cycle à réchauffer la lame de coupe 42 au moment où l'on a besoin d'utiliser la tête de pose de bandelette 40.

On notera que cette caractéristique pourrait constituer une invention à part entière, qui pourrait notamment s'appliquer quel que soit le moyen de liaison formant l'organe suiveur qui assure la liaison permanente entre le support 6 et la tête de pose de bandelette 40, et notamment que ce moyen de liaison soit un compas 20 ou un moyen de liaison autre qu'un compas, de façon que l'alimentation 46 en énergie de l'élément chauffant 45 passerait par ledit moyen de liaison, distinct du robot manipulateur 11, afin que ladite alimentation 46 en énergie de l'élément chauffant 45 ne soit pas interrompue lorsque la tête de pose de bandelette 40 se déconnecte du robot manipulateur 11 et reste en attente dans le magasin 5 ; tandis que, par ailleurs, des alimentations en autres énergies, notamment l'alimentation 47 en énergie motrice pour l'actionnement de la lame de coupe 42, et/ou l'alimentation en énergie de capteurs ou bien l'alimentation en énergie motrice d'organes motorisés appartenant à la tête de pose de bandelette 40 ou même appartenant au moyen de liaison, notamment appartenant au compas 20, passeraient par l'interface d'amarrage 12 du robot manipulateur 11, et seraient donc connectées à la tête de pose de bandelette 40, et donc disponibles et actives, seulement lorsque le robot manipulateur 11 est accouplé à la tête de pose de bandelette 40, puis déconnectées lorsque le robot manipulateur 11 se sépare de ladite tête de pose de bandelette 40.

L'alimentation 46 en énergie de l'élément chauffant 45 pourra être réalisée par tout circuit approprié passant par le compas 20, en provenance du support 6 du magasin 5, sans passer par le robot manipulateur 11.

L'alimentation 47, de fait temporaire, en énergie motrice pourra être réalisée par tout circuit approprié comprenant par exemple un jeu de connecteurs conjugués, dont l'un est embarqué sur le robot manipulateur, au niveau de l'interface d'amarrage 12, et l'autre embarqué sur la tête de pose de bandelette 40, et qui s'emboîtent lorsque le robot manipulateur 11 s'accouple avec ladite tête de pose de bandelette 40, et qui restent ainsi connectés aussi longtemps que le robot manipulateur 11 reste accouplé à la tête de pose de bandelette 40.

Le fait de ne pas faire passer par le compas 20 le circuit d'alimentation 47 en énergie motrice permet avantageusement de simplifier et d'alléger la structure du compas 20, en exploitant une alimentation 47 en énergie motrice partagée, centralisée au niveau du robot manipulateur 11.

De préférence, au moins l'un des outils de pose 10 est formé par une pompe à gomme qui comprend une extrudeuse qui génère un ruban de matériau à base de caoutchouc à poser sur le tambour.

Une telle pompe à gomme a notamment été décrite dans de précédentes demandes de brevet déposées par la demanderesse, par exemple EP-0690229, et ne sera donc pas reprise en détail ici.

De préférence, l'alimentation en énergie de l'extrudeuse peut alors être fournie par le robot manipulateur 11, au moyen d'un accouplement mécanique, tel qu'un crabot, qui engage la pompe à gomme lorsque le robot manipulateur 11 saisit ladite pompe à gomme.

Ici encore, cela permettra d'améliorer la compacité et la légèreté des compas 20 concernés, en utilisant une même source d'énergie mécanique, disponible via le robot manipulateur 11, pour alimenter séparément, les unes après les autres, les différentes pompes à gomme de l'installation 1.

On notera que, de manière générale, l'interface d'amarrage 12 qui permet l'accouplement du robot 11 avec l'outil de pose 10 pourra être avantageusement multi-énergies, c'est-à-dire capable de transmettre à la fois une énergie mécanique (par transmission solide ou par système pneumatique ou hydraulique) et une énergie électrique et/ou des signaux électriques (pour des capteurs, par exemple).

L'installation 1 pourra par ailleurs comprendre d'autre postes, notamment des postes de stockage ou de préparation qui permettront de stocker ou préparer des composants 4 qui seront ensuite acheminés jusqu'au compas 20 et aux outils de pose 10.

## Revendications

1. Installation (1) destinée à la fabrication de bandages pour roues de véhicules, ladite installation comprenant :
- une zone de travail (2) comprenant un tambour (3) qui est monté rotatif autour de son axe central (X3) et qui est destiné à recevoir une pluralité de composants (4) constitutifs d'un bandage, de préférence des composants (4) à base de caoutchouc,
- un magasin (5), qui est placé en périphérie de la zone de travail (2), et qui possède un support (6) portant une pluralité d'outils de pose (10) distincts, destinés chacun à poser un composant (4) différent,
- un robot manipulateur (11) qui est agencé pour tout d'abord venir saisir sélectivement un outil de pose (10) en attente dans le magasin (5) et amener ledit outil de pose (10) auprès du tambour (3) afin d'utiliser ledit outil de pose (10) pour poser le composant (4) correspondant sur le tambour (3), puis ensuite retourner ledit outil de pose (10) au magasin (5) et se détacher dudit outil de pose (10) afin de l'échanger contre un autre outil de pose (10) présent dans le magasin (5),
**caractérisé en ce que** plusieurs des outils de pose (10) sont reliés chacun au support (6) du magasin (5) par un organe suiveur (20) articulé, dit « compas » (20), qui est propre à l'outil de pose (10) considéré et qui est agencé pour accompagner l'outil de pose (10) lorsque ledit outil de pose (10) est déplacé par le robot manipulateur (11), chaque compas (20) comprenant à cet effet :
- un fût (21), par lequel le compas (20) est rattaché au support (6) du magasin (5) et qui permet audit compas (20) de s'orienter en lacet en effectuant, par rapport au support (6) du magasin, une rotation (R21) autour d'un axe vertical (Z21),
- un premier bras (22) qui est rattaché au fût (21) par une première liaison pivot (23) d'axe (Y23) horizontal qui permet au premier bras (22) de basculer en tangage (R23) par rapport au fût (21),
- un second bras (24) qui s'articule sur le premier bras (22) par une seconde liaison pivot (25) d'axe (Y25) horizontal, distante de la première liaison pivot (23), et qui permet au second bras (24) de basculer en tangage (R25) par rapport au premier bras (22), ledit second bras (24) présentant, à distance de la seconde liaison pivot (25), une extrémité libre (26) à laquelle est rattaché l'outil de pose (10) concerné.

2. Installation selon la revendication 1 **caractérisée en ce que** le support (6) du magasin présente un agencement échancré (30) formant une délimitation concave par rapport à la zone de travail (2).

3. Installation selon la revendication 2 **caractérisée en ce que** le support (6) du magasin (5) dessine, en projection dans un plan horizontal, une forme en U qui s'ouvre sur la zone de travail (2), de préférence une forme en U trapézoïdale qui s'ouvre sur la zone de travail par la grande base du trapèze, ladite forme en U comprenant une branche de fond (31) et deux branches latérales (32, 33), et **en ce que** des compas (20) sont implantés sur au moins deux desdites branches (31, 32, 33), de préférence sur chacune de ces trois branches (31, 32, 33).

4. Installation selon l'une des revendications précédentes **caractérisée en ce qu'**au moins un outil de pose (10) est formé par une tête de pose de bandelette (40) qui comprend un rouleau applicateur (41) agencé pour presser une bandelette contre le tambour (3), ainsi qu'une lame de coupe (42) pour couper la bandelette à la longueur souhaitée en fin de pose, et **en ce que** le compas (20) qui est associé à ladite tête de pose de bandelette (40) comprend un convoyeur (43, 44), de préférence motorisé, qui est agencé pour acheminer la bandelette le long des premier et second bras (22, 24) du compas (20), jusqu'à la tête de pose de bandelette (40).

5. Installation selon la revendication 4 **caractérisée en ce que** la tête de pose de bandelette (40) comprend un élément chauffant (45) pour chauffer la lame de coupe (42), **en ce que** l'alimentation (46) en énergie, de préférence en énergie électrique, dudit élément chauffant (45) passe par le compas (20), de façon à ne pas être interrompue lorsque le robot manipulateur (11) repose la tête de pose de bandelette (40) dans le magasin (5) et se détache de ladite tête de pose de bandelette (40), tandis que l'alimentation (47) en énergie motrice, par exemple pneumatique ou électrique, qui est destinée à actionner la lame de coupe (42) pour couper la bandelette, passe par le robot manipulateur (11), de sorte à être raccordée à la tête de pose de bandelette (40) lorsque ledit robot manipulateur (11) saisit ladite tête de pose de bandelette (40), puis déconnectée de ladite tête de pose de bandelette (40) lorsque le robot manipulateur (11) se sépare de nouveau de ladite tête de pose de bandelette (40).

6. Installation selon l'une des revendications précédentes **caractérisée en ce qu'**au moins l'un des outils de pose (10) est formé par une pompe à gomme qui comprend une extrudeuse qui génère un ruban de matériau à base de caoutchouc à poser sur le tambour (3).

7. Installation selon revendication 6 **caractérisée en ce que** l'alimentation en énergie de l'extrudeuse est fournie par le robot manipulateur (11), au moyen d'un accouplement mécanique, tel qu'un crabot, qui engage la pompe à gomme lorsque le robot manipulateur (11) saisit ladite pompe à gomme.

## Patentansprüche

1. Anlage (1), die zur Herstellung von Reifen für Räder von Fahrzeugen bestimmt ist, wobei die Anlage umfasst:
- einen Arbeitsbereich (2), der eine Trommel (3) umfasst, die um ihre zentrale Achse (X3) drehbar gelagert ist und die dazu bestimmt ist, eine Mehrzahl von Bauteilen (4) aufzunehmen, aus denen ein Reifen besteht, bevorzugt Bauteile (4) auf Kautschukbasis,
- ein Magazin (5), das in der Peripherie des Arbeitsbereichs (2) angeordnet ist und das einen Träger (6) besitzt, der eine Mehrzahl von verschiedenen Auflegewerkzeugen (10) trägt, die jeweils dazu bestimmt sind, ein unterschiedliches Bauteil (4) aufzulegen,
- einen Handlingroboter (11), der dazu ausgebildet ist, zunächst selektiv ein in dem Magazin (5) wartendes Auflegewerkzeug (10) zu ergreifen und das Auflegewerkzeug (10) in die Nähe der Trommel (3) zu führen, um das Auflegewerkzeug (10) dazu zu verwenden, das entsprechende Bauteil (4) auf die Trommel (3) aufzulegen, dann das Auflegewerkzeug (10) zu dem Magazin (5) zurückzubringen und sich von dem Auflegewerkzeug (10) zu lösen, um es gegen ein anderes Auflegewerkzeug (10), das sich in dem Magazin (5) befindet, zu tauschen,
**dadurch gekennzeichnet, dass** mehrere der Auflegewerkzeuge (10) jeweils mit dem Träger (6) des Magazins (5) durch ein gelenkiges Folgeelement (20), "Gestänge" (20) genannt, verbunden sind, das spezifisch für das betrachtete Auflegewerkzeug (10) ist und das dazu ausgebildet ist, das Auflegewerkzeug (10) zu begleiten, wenn das Auflegewerkzeug (10) von dem Handlingroboter (11) verlagert wird, wobei jedes Gestänge (20) zu diesem Zweck umfasst:
- einen Schaft (21), über den das Gestänge (20) an dem Träger (6) des Magazins (5) befestigt ist und der es dem Gestänge (20) ermöglicht, sich gierend auszurichten, indem er in Bezug auf den Träger (6) des Magazins eine Drehung (R21) um eine vertikale Achse (Z21) ausführt,
- einen ersten Arm (22), der an dem Schaft (21) über eine erste Schwenkverbindung (23) mit horizontaler Achse (Y23) befestigt ist, die es dem ersten Arm (22) ermöglicht, in Bezug auf den Schaft (21) nickend (R23) zu schwenken,
- einen zweiten Arm (24), der an den ersten Arm (22) über eine zweite Schwenkverbindung (25) mit horizontaler Achse (Y25) angelenkt ist, die von der ersten Schwenkverbindung (23) entfernt ist und die es dem zweiten Arm (24) ermöglicht, in Bezug auf den ersten Arm (22) nickend (R25) zu schwenken, wobei der zweite Arm (24), beabstandet von der zweiten Schwenkverbindung (25), ein freies Ende (26) aufweist, an dem das betreffende Auflegewerkzeug (10) befestigt ist.

2. Anlage nach Anspruch 1, **dadurch gekennzeichnet, dass** der Träger (6) des Magazins eine eingebuchtete Anordnung (30) aufweist, die eine konkave Begrenzung in Bezug auf den Arbeitsbereich (2) bildet.

3. Anlage nach Anspruch 2, **dadurch gekennzeichnet, dass** der Träger (6) des Magazins (5), in der Projektion in einer horizontalen Ebene, eine U-Form beschreibt, die sich zu dem Arbeitsbereich (2) hin öffnet, bevorzugt eine trapezförmige U-Form, die sich zu dem Arbeitsbereich hin an der größten Grundseite des Trapezes öffnet, wobei die U-Form einen Bodenschenkel (31) und zwei seitliche Schenkel (32, 33) umfasst, und dass Gestänge (20) an mindestens zwei der Schenkel (31, 32, 33), bevorzugt an jedem dieser drei Schenkel (31, 32, 33), angeordnet sind.

4. Anlage nach einem der vorhergehenden Ansprüche, **dadurch gekennzeichnet, dass** mindestens ein Auflegewerkzeug (10) durch einen Streifenauflegekopf (40) gebildet wird, der eine Anlegewalze (41) umfasst, die dazu ausgebildet ist, einen Streifen gegen die Trommel (3) zu pressen, sowie eine Schneidklinge (42), um den Streifen am Ende des Auflegens auf die gewünschte Länge zu schneiden, und dass das Gestänge (20), das dem Streifenauflegekopf (40) zugeordnet ist, einen, bevorzugt motorisierten, Förderer (43, 44) umfasst, der dazu ausgebildet ist, den Streifen entlang der ersten und zweiten Arme (22, 24) des Gestänges (20) bis zu dem Streifenauflegekopf (40) zu transportieren.

5. Anlage nach Anspruch 4, **dadurch gekennzeichnet, dass** der Streifenauflegekopf (40) ein Heizelement (45) umfasst, um die Schneidklinge (42) zu erhitzen, dass die Versorgung (46) mit Energie, insbesondere mit elektrischer Energie, des Heizelements (45) durch das Gestänge (20) verläuft, so dass sie nicht unterbrochen wird, wenn der Handlingroboter (11) den Streifenauflegekopf (40) in das Magazin (5) zurücksetzt und sich von dem Streifenauflegekopf (40) löst, während die Versorgung (47) mit Antriebsenergie, zum Beispiel pneumatische oder elektrische, die zum Betätigen der Schneidklinge (42) bestimmt ist, um den Streifen zu Schneiden, durch den Handlingroboter (11) verläuft, so dass sie an den Streifenauflegekopf (40) angeschlossen wird, wenn der Handlingroboter (11) den Streifenauflegekopf (40) ergreift, dann von dem Streifenauflegekopf (40) abgesteckt wird, wenn sich der Handlingroboter (11) wieder von dem Streifenauflegekopf (40) trennt.

6. Anlage nach einem der vorhergehenden Ansprüche, **dadurch gekennzeichnet, dass** mindestens eines der Auflegewerkzeuge (10) durch eine Gummipumpe gebildet wird, die einen Extruder umfasst, der ein Band aus Material auf Kautschukbasis erzeugt, das auf die Trommel (3) aufzulegen ist.

7. Anlage nach Anspruch 6, **dadurch gekennzeichnet, dass** die Versorgung des Extruders mit Energie durch den Handlingroboter (11) mittels einer mechanischen Kupplung wie einer Klaue bereitgestellt wird, die in die Gummipumpe eingreift, wenn der Handlingroboter (11) die Gummipumpe ergreift.

## Claims

1. Installation (1) intended for the manufacture of tyres for vehicle wheels, said installation comprising:
- a work area (2) comprising a drum (3) which is rotatably mounted about its central axis (X3) and which is intended to receive a plurality of components (4) constituting a tyre, preferably rubber-based components (4),
- a magazine (5), which is placed at the periphery of the work area (2) and has a support (6) carrying a plurality of separate laying tools (10), each intended for laying a different component (4),
- a manipulator robot (11) which is arranged to firstly selectively grasp a laying tool (10) waiting in the magazine (5) and bring said laying tool (10) to the drum (3) in order to use said laying tool (10) to lay the corresponding component (4) on the drum (3), then return said laying tool (10) to the magazine (5) and detach itself from said laying tool (10) in order to exchange it for another laying tool (10) present in the magazine (5),
**characterized in that** several of the laying tools (10) are each connected to the support (6) of the magazine (5) by an articulated follower member (20), called a "compass" (20), which is specific to the laying tool (10) in question and which is arranged to accompany the laying tool (10) when said laying tool (10) is moved by the manipulator robot (11), each compass (20) comprising for this purpose:
- a barrel (21), by means of which the compass (20) is attached to the support (6) of the magazine (5) and which allows said compass (20) to be oriented in yaw by carrying out, with respect to the support (6) of the magazine, a rotation (R21) about a vertical axis (Z21),
- a first arm (22) which is connected to the barrel (21) by a first pivot connection (23) of horizontal axis (Y23) which allows the first arm (22) to tilt in pitch (R23) with respect to the barrel (21),
- a second arm (24) which is articulated on the first arm (22) by a second pivot connection (25) of horizontal axis (Y25), distant from the first pivot connection (23), which allows the second arm (24) to tilt in pitch (R25) with respect to the first arm (22), said second arm (24) having, at a distance from the second pivot connection (25), a free end (26) to which the laying tool (10) in question is attached.

2. Installation according to Claim 1, **characterized in that** the support (6) of the magazine has a notched arrangement (30) forming a concave delimitation with respect to the work area (2).

3. Installation according to Claim 2, **characterized in that** the support (6) of the magazine (5), in projection in a horizontal plane, defines a U-shape which opens onto the work area (2), preferably a trapezoidal U-shape which opens onto the work area via the large base of the trapezium, said U-shape comprising a bottom branch (31) and two lateral branches (32, 33), and **in that** compasses (20) are installed on at least two of said branches (31, 32, 33), preferably on each of these three branches (31, 32, 33).

4. Installation according to one of the preceding claims, **characterized in that** at least one laying tool (10) is formed by a strip laying head (40) which comprises an applicator roller (41) arranged to press a strip against the drum (3), and a cutting blade (42) for cutting the strip to the desired length at the end of laying, and **in that** the compass (20) which is associated with said strip laying head (40) comprises a conveyor (43, 44), preferably motorized, which is arranged to convey the strip along the first and second arms (22, 24) of the compass (20) to the strip laying head (40).

5. Installation according to Claim 4, **characterized in that** the strip laying head (40) comprises a heating element (45) for heating the cutting blade (42), **in that** the energy supply (46), preferably electrical energy supply, of said heating element (45) passes through the compass (20), so as not to be interrupted when the manipulator robot (11) puts the strip laying head (40) back in the magazine (5) and detaches itself from said strip laying head (40), whereas the drive energy supply (47), for example pneumatic or electrical energy supply, which is intended to actuate the cutting blade (42) to cut the strip, passes through the manipulator robot (11) so as to be connected to the strip laying head (40) when said manipulator robot (11) grasps said strip laying head (40), then disconnected from said strip laying head (40) when the manipulator robot (11) separates again from said strip laying head (40).

6. Installation according to one of the preceding claims, **characterized in that** at least one of the laying tools (10) is formed by a rubber pump which comprises an extruder which generates a band of rubber-based material to be laid on the drum (3).

7. Installation according to Claim 6, **characterized in that** the energy supply to the extruder is provided by the manipulator robot (11) by means of a mechanical coupling, such as a dog, which engages the rubber pump when the manipulator robot (11) grasps said rubber pump.
